# EUROPEAN PATENT APPLICATION

(11) **EP 4 692 866 A1**
(43) Date of publication of application: **11.02.2026**
(21) Application number: 25184075.7
(22) Date of filing: 19.06.2025
(51) Int. Cl.: G02B 5/02, G02B 1/111, G02B 1/113, G02B 1/14, G02F 1/1335

(54) **ANTI-GLARE FILM**

(30) Priority: 06.08.2024 TW 113129418; 27.09.2024 TW 113136967
(71) Applicant: BenQ Materials Corporation, Taoyuan City (TW)
(72) Inventor: Chuang, Kai-Chun, Taoyuan City (TW); Chung, Yu-Lun, Taoyuan City (TW); Yu, Kuo-Hsuan, Taoyuan City (TW)
(74) Representative: Murgitroyd & Company

(57) **Abstract**

An anti-glare film is disclosed. The anti-glare film comprises a polyester substrate with an in-plane retardation not greater than 1500 nm and having an average refractive index (nₚ) of 1.60 to 1.70, an anti-glare coating layer formed on one side of the polyester substrate, and a first primer layer disposed between the polyester substrate and the anti-glare coating layer, wherein the first primer layer has a first refractive index (n₁) of 1.55 to 1.65, and the average refractive index (n_{g}) of the polyester substrate is greater than the first refractive index (n₁) of the first primer layer.

## Description

### CROSS - REFERENCE TO RELATED APPLICATION

This application claims the benefit of Taiwanese patent application serial No. 113129418, filed on Aug. 6, 2024, and the benefit of Taiwanese patent application serial No. 113136967, filed on Sep. 27, 2024, and the subject matters of which are incorporated herein by reference.

### BACKGROUND OF THE INVENTION

### Field of Invention

The present invention relates to an anti-glare film applied to the surface of a viewing-side polarizer of a display which can reduce the interference rainbow patterns, and has high clarity and low white haze.

### Description of Related Art

Due to the development trend of display devices, such as liquid crystal displays (LCDs), organic light-emitting diode (OLED) displays, micron light-emitting diode (micro-LED) displays, toward high brightness, thinness, flexibility and the high image quality, the structure of the functional optical films used in the display become complicated and the optical matching requirements between the functional optical films are more stringent.

At present, when providing polarizers with a better water vapor transmission resistance and mechanic strength, either the liner polarizers for LC displays or the circular polarizers for light-emitting diode displays, the protectability and the optical properties required by the outer protective film cannot be sacrificed. It has been proposed to use polyester film with crystalline feature to replace triacetyl cellulose (TAC) film as protective film for the polarizer. However, the polyester film, such as polyethylene terephthalate (PET) film, comprising benzene-ring structure with high crystallinity and has birefringence after stretch manufacturing process. Therefore, when PET film is used as protective film for a display, the image quality of the display will be affected, such as occurrence of interference rainbow patterns. For reducing the occurrence of interference rainbow patterns, the polyester film commonly used is a polyethylene terephthalate film with an in-plane retardation (R0) of at least 3000 nm along with a high haze or high roughness coating layer to disrupt the light interference of the passing-through light, and preferably the polyethylene terephthalate film with an in-plane retardation (R0) of 8000 nm or more than 8000 nm to reduce the occurrence of interference rainbow patterns.

However, the polyethylene terephthalate film with high in-plane retardation (R0) with a high haze or high roughness coating layer significantly affects the image quality and appearance of the display. Furthermore, for obtaining a birefringent film with very high in-plane retardation, the birefringent film can be a polyester film manufactured by a uniaxial or biaxial stretching process at a high stretching rate or a polyester film of high thickness (such as greater than 100 µm) to obtain the expected display quality. However, the birefringent polyester film manufactured by a high stretching rate has a reduced tensile strength and different heat shrinkage ratios at machine direction and transverse direction, which is adversely to be used as a protective film. When the birefringent polyester film is laminated with a polarizing layer which is also manufactured by a stretching process, the laminated polarizer should keep a uniform stress to avoid the unexpected uneven stress pattern or color stain. On the other, increasing in-plane retardation by increasing the thickness of the polyester film is a direct way but contrary to the current development trend to thinner and lighter devices. And, when the thicker protective film is applied to flexible or arc-shaped device, the thickness of the film will change the distribution of the bending stress to increase the difficulties of optical film lamination design.

Therefore, the present invention is to provide an anti-glare film for the surface of a viewing-side polarizer of a display comprising a polyester substrate with low in-plane retardation (R0), such as a polyethylene terephthalate film with R0 <1500 nm. The anti-glare film applied in front of the viewing-side polarizer can provide interference rainbow patterns resistance.

### SUMMARY OF THE INVENTION

The present invention is to provide an anti-glare film comprising a polyester substrate with an in-plane retardation not greater than 1500 nm and having an average refractive index (nₚ) of 1.60 to 1.70, an anti-glare coating layer formed on one side of the polyester substrate, and a first primer layer disposed between the polyester substrate and the anti-glare coating layer, wherein the first primer layer has a first refractive index (n₁) of 1.55 to 1.65, and the average refractive index (nₚ) of the polyester substrate is greater than the first refractive index (n₁) of the first primer layer.

An aspect of the present invention is to provide an anti-glare film comprising a polyester substrate with an in-plane retardation not greater than 1500 nm and having an average refractive index nₚ of 1.60 to 1.70, an anti-glare coating layer formed on one side of the polyester substrate, wherein the anti-glare coating layer comprises an acrylic binder and a plurality of organic micro-particles, and a first primer layer disposed between the polyester substrate and the anti-glare coating layer, wherein the first primer layer has a first refractive index (n₁) of 1.55 to 1.65, and the average refractive index (nₚ) of the polyester substrate is greater than the first refractive index (n₁) of the first primer layer.

Another aspect of the present invention is to provide an anti-glare film comprising a polyester substrate with an in-plane retardation not greater than 1500 nm and having an average refractive index nₚ of 1.60 to 1.70, an anti-glare coating layer formed on one side of the polyester substrate, wherein the anti-glare coating layer comprises an acrylic binder and a plurality of amorphous silica micro-particles, and a first primer layer disposed between the polyester substrate and the anti-glare coating layer, wherein the first primer layer has a first refractive index (n₁) of 1.55 to 1.65, and the average refractive index (nₚ) of the polyester substrate is greater than the first refractive index (n₁) of the first primer layer.

In the anti-glare film of an embodiment of the present invention, the polyester substrate is a uniaxial or biaxial stretched polyester film, and the birefringence (△n) of the polyester substrate is between 0.003 to 0.015.

In the anti-glare film of an embodiment of the present invention, the anti-glare film further comprises a second primer layer disposed on another side of the polyester substrate opposite to the first primer layer, wherein the second primer layer has a second refractive index (n₂) of 1.51 to 1.60, and the average refractive index (nₚ), the first refractive index (n₁) and the second refractive index (n₂) satisfy the relationships of (nₚ-n₁)/(nₚ-n₂) ≤0.7 and (n₁-n₂) ≥0.05.

In an embodiment of the present invention, the anti-glare coating layer of the anti-glare film comprises organic micro-particles, wherein the organic micro-particles are present in an amount of 0.5 to 25 parts by weight per 100 parts by weight of the acrylic binder.

In an embodiment of the present invention, the anti-glare coating layer of the anti-glare film comprising organic micro-particles further contains 0.5 to 12 parts by weight of silica nanoparticles per 100 parts by weight of the acrylic binder.

In an embodiment of the present invention, the anti-glare coating layer of the anti-glare film comprises amorphous silica micro-particles, wherein the amorphous silica micro-particles are present in an amount of 2 to 35 parts by weight per 100 parts by weight of the acrylic binder.

In an embodiment of the present invention, the anti-glare coating layer of the anti-glare film containing amorphous silica micro-particles further contains 3 to 20 parts by weight of organic micro-particles per 100 parts by weight of the acrylic binder.

In an embodiment of the present invention, the anti-glare film further comprises an anti-reflective layer on the surface of the anti-glare coating layer.

In the anti-glare film of an embodiment of the present invention, the thickness of the anti-reflective layer is between 0.1 µm and 0.3 µm.

The above and other aspects of the invention will become better understood with regard to the following detailed description of the preferred but nonlimiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

### DETAILED DESCRIPTION OF THE INVENTION

In the following detailed description, for purposes of explanation, numerous specific details are set forth in order to provide a thorough understanding of the disclosed embodiments. It will be apparent, however, that one or more embodiments may be practiced without these specific details.

It is apparent that departures from specific designs and methods described and shown will suggest themselves to those skilled in the art and may be used without departing from the spirit and scope of the invention. The present invention is not restricted to the particular constructions described and illustrated, but should be construed to cohere with all modifications that may fall within the scope of the appended claims.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The disclosed anti-glare film comprises a polyester substrate with low in-plane retardation to provide a satisfied water vapor transmission resistance and mechanic strength on the surface of the display. The polyester substrate used in the disclosed anti-glare film provides satisfied light transmittance and reduced interface reflection and image light-intensity loss, and will not cause the interference rainbow patterns occurred at the interfaces of the both sides of the polyester substrate by the image light or external ambient light.

An aspect of the present invention is to provide an anti-glare film comprising a polyester substrate with an in-plane retardation not greater than 1500 nm and having an average refractive index (nₚ) of 1.60 to 1.70, an anti-glare coating layer formed on one side of the polyester substrate, wherein the anti-glare coating layer comprises an acrylic binder and a plurality of organic micro-particles, and a first primer layer disposed between the polyester substrate and the anti-glare coating layer, wherein the first primer layer has a first refractive index (n₁) of 1.55 to 1.65, and the average refractive index nₚ of the polyester substrate is greater than the first refractive index (n₁) of the first primer layer.

Another aspect of the present invention is to provide an anti-glare film comprising a polyester substrate with an in-plane retardation not greater than 1500 nm and having an average refractive index (nₚ) of 1.60 to 1.70, an anti-glare coating layer formed on one side of the polyester substrate, wherein the anti-glare coating layer comprises an acrylic binder and a plurality of amorphous silica micro-particles, and a first primer layer disposed between the polyester substrate and the anti-glare coating layer, wherein the first primer layer has a first refractive index (n₁) of 1.55 to 1.65, and the average refractive index (nₚ) of the polyester substrate is greater than the first refractive index (n₁) of the first primer layer.

The polyester substrate used in the disclosed anti-glare film has a light transmittance of at least 85%. The thickness of the polyester substrate can be varied for different applications, wherein the thickness of the polyester substrate can be between 20 µm and 80 µm.

In the disclosed anti-glare film, the first refractive index (n₁) of the first primer layer of the polyester substrate is less than the average refractive index (nₚ) of the polyester substrate to obtain a lower surface reflectivity. In an embodiment of the disclosed anti-glare film, the first refractive index (n₁) of the first primer layer is preferably between 1.56 and 1.65.

The polyester substrate with high in-plane retardation is not used in the disclosed anti-glare film as a polyester substrate, the light coherence occurred when the light passing through the polyester substrate can be reduced by a high-haze anti-glare coating layer on the polyester substrate, or can be reduced by a low-haze anti-glare coating layer on the polyester substrate. In a preferred embodiment of the present invention, the anti-glare coating layer with a high haze, a haze less than or equal to 50%, a haze less than or equal to 30%, a haze less than or equal to 20%, or a haze not greater than 5%, can obtain an anti-interference rainbow pattern effect. In an embodiment of the present invention, the thickness of the anti-glare coating layer of the anti-glare film is between 2 µm and 10 µm, and preferably between 5 µm and 9 µm.

In a disclosed anti-glare film, the anti-glare coating layer contains organic micro-particles, where the organic micro-particles are present in an amount of 0.5 to 25 parts by weight per 100 parts by weight of the acrylic binder, and preferably are present in an amount of 0.8 to 20 parts by weight of organic micro-particles. The refractive index of the organic micro-particles is between 1.4 and 1.6, and the particle size thereof is between 0.5 µm and 6.0 µm, preferably between 1.0 µm and 5.5 µm. In the anti-glare film of the present invention comprising an anti-glare layer with organic micro-particles, wherein the organic micro-particles used can be the ones with appropriate refractive index and particle size and the amount thereof can be controlled to adjust the haze of the anti-glare film between 1% and 50%. **In** a preferred embodiment of the anti-glare film of the present invention, when the total haze of the anti-glare film is low, for example, not greater than 10%, and it is preferred to use organic micro-particles with smaller particle sizes, for example, wherein the organic micro-particles with particle size between 0.5 µm and 4.0 µm, and preferably between 1.0 µm and 3.5 µm. **In** a preferred embodiment of the anti-glare film of the present invention, when the total haze of the anti-glare film is high, for example, greater than 10%, it is preferred to use organic micro-particles with particle size between 1.0 µm and 6.0 µm, and preferably between 3.0 µm and 5.5 µm. The suitable organic micro-particles can be polymethyl methacrylate resin micro-particles, polystyrene resin micro-particles, styrene-methyl methacrylate copolymer micro-particles, polyethylene resin micro-particles, epoxy resin micro-particles, polysiloxane resin micro-particles, polyvinylidene fluoride resin micro-particles, polyvinyl fluoride resin micro-particles, and preferably be polymethyl methacrylate resin micro-particles, polystyrene resin micro-particles or styrene-methyl methacrylate copolymer micro-particles.

According to an embodiment of the present invention, the anti-glare coating layer of the anti-glare film contains organic micro-particles, wherein the anti-glare coating layer can further contain 0.5 to 12 parts by weight of silica nanoparticles per 100 parts by weight of the acrylic binder, and preferably contains 0.8 to 10 parts by weight of silica nanoparticles. The average primary particle diameter of the silica nanoparticles is between 5 nm and 150 nm, and more preferably between 5 nm and 100 nm.

According to another one embodiment of the present invention, the anti-glare coating layer of the anti-glare film contains amorphous silica micro-particles, wherein the average particle size of the amorphous silica particles measured by laser method is between 2.0 µm and 10 µm, preferably between 2.0 µm and 8 µm, and the BET specific surface area thereof is between 60 m²/g and 100 m²/g, preferably between 65 m²/g and 90 m²/g. In an embodiment of the present invention, the using amount of the amorphous silica micro-particles contained in the anti-glare coating layer of the anti-glare film is present 1 to 35 parts by weight, preferably 2 to 30 parts by weight, per 100 parts by weight of the acrylic binder.

According to still another one embodiment of the present invention, the anti-glare coating layer of the anti-glare film containing amorphous silica micro-particles can further contain a plurality of organic micro-particles, wherein the organic micro-particles is present in an amount of 5 to 25 parts by weight. The organic micro-particles suitable for the present anti-glare coatings layer containing amorphous silica micro-particles are polymethyl methacrylate resin particles, polystyrene resin particles, styrene-methyl methacrylate copolymer particles, melamine particles, polyethylene resin particles, epoxy resin particles, polysiloxane resin particles, polyvinylidene fluoride resin or polyvinyl fluoride resin particles.

The anti-glare film of the present invention is used to be adhered to a viewing-side polarizer of a display, wherein the polarizer is a common polarizing layer formed by a stretched polyvinyl alcohol film and adhered to a polyester substrate with polyvinyl alcohol adhesive. In the anti-glare film of an embodiment of the present invention, the anti-glare film further comprises a second primer layer disposed on the other side of the polyester substrate opposite to the first primer layer, wherein the second primer layer has a second refractive index n₂ of 1.51 to 1.60, preferably 1.52 to 1.60, so as to obtain a lower interface reflectivity between the second primer layer and the polyester substrate, and the refractive index of the polyvinyl alcohol film and the polyvinyl alcohol adhesive can be matched to reduce the interface reflectivity of the polarizing layer. Furthermore, the second refractive index (n₂) of the second primer layer should be smaller than the first refractive index (n₁) of the first primer layer, that is, nₚ>n₁>n₂, and the ratio of the refractive index difference between the polyester substrate and the two side primer layers needs to satisfy the relationship: (nₚ-n₁)/(nₚ-n₂)≤0.7, so as to reduce the interface reflectivity on both sides of the polyester substrate and reduce the occurrence of interference rainbow patterns at the same time.

It is known that the average refractive index of the polyester substrate is ranging from about 1.60 and 1.70, therefore, the refractive index differences at the interfaces with the air and with the polarizing layer are fairly high. And, due to the birefringence of the polyester substrate, light passing therethrough tends to generate high-intensity coherent light to result in interference rainbow patterns. Therefore, if the difference of the polyester substrate refractive index and the refractive indexes of the primers at both sides thereof does not meet the relationship: (nₚ-n₁)/(nₚ-n₂)≤0.7, that means the refractive index difference (nₚ-n₁) of the polyester substrate and the first primer layer is high to result in a high surface reflectivity of the polyester substrate, or the refractive index difference (nₚ-n₂) of the polyester substrate and the second primer layer is low to cause the reduced transmittance of the image light between the film layers, because when the polarizing layer is adhered to form the polarizer, the refractive index difference of the interface between the polarizing layer and the polyester substrate is relatively increased. Both of these conditions will make it difficult to effectively reduce the occurrence of interference rainbow patterns, which will interfere with the quality of the image light emitted by the display when using a polyester substrate with an in-plane phase difference of not greater than 1500 nm. The anti-glare film of the present invention does not use a polyester substrate with very high in-plane retardation. Although the anti-glare coating layer with high total haze (for example, greater than or equal to 80%) can be used to reduce the coherence of light passing through the two sides of the polyester substrate, an anti-glare coating layer with lower total haze can also be used. **In** the embodiments of the present invention, the total haze of the anti-glare coating layer can be high haze, less than or equal to 50%, less than or equal to 30%, less than or equal to 20%, or less than or equal to 5%, all of which can have the effect of resisting interference rainbow patterns, and will not cause image quality degradation or make the display look foggy and have poor visual experience due to excessive haze. As the total haze decreases, the anti-glare film of the present invention can also obtain better light transmittance, reduce interface reflection and image light-intensity loss.

**In** a preferred embodiment of the anti-glare film of the present invention, the difference (n₁-n₂) between the first refractive index (n₁) of the first primer layer and the second refractive index (n₂) of the second primer layer of the polyester substrate is greater than or equal to 0.05, so that the coherence of light passing through the interfaces on both sides of the polyester substrate is reduced, and the light with different wavelength is less likely to produce interference rainbow patterns due to the constructive interference.

**In** the anti-glare film of an embodiment of the present invention, the first primer layer of the polyester substrate is a coating layer comprising acetalized polyvinyl alcohol, polyurethane, urethane, polyether resin, polyacrylic resin, isocyanate or combinations thereof, but not limited to. The coating layer can optionally add metal oxide particles or phenyl-containing compounds to increase the refractive index to the expected range. **In** an embodiment of the disclosed anti-glare film, the thickness of the first primer layer and the second primer layer are both in the range of 0.1 µm to 0.3 µm. The primer layers in this thickness range can modify the refractive index of the both sides of the polyester substrate, but does not significantly increase the thickness of the anti-glare film to affect the stress distribution when the anti-glare film is applied to a flexible display or a display with curved edge.

The polyester substrate of the disclosed anti-glare film is a polyester substrate with an in-plane retardation less than 1500 nm. Because the polyester substrate is not a substrate with high in-plane retardation, the polyester substrate is not manufactured by a stretching process with a high stretching ratio to increase the birefringence (Δn) of the orthogonal machine direction and transverse direction. The polyester substrate suitably used in the present invention is a uniaxial stretched or a biaxial stretched polyester film with low in-plane retardation, and the birefringence difference of which is between 0.003 and 0.015, which means that the polyester substrate is a uniaxial stretched or a biaxial stretched polyester film with low in-plane retardation manufactured by a low stretching ratio process. Because the polyester substrate used in the present invention is manufactured by a stretching process with a low stretching ratio, the polyester substrate has a preferable tensile strength and a more uniform thermal shrinkage ratio in machine direction and transverse direction. When the anti-glare film is applied to a polarizer, whether the polarizing layer is a highly stretched polarizing layer or a coating polarizer layer without stretching, the stress distribution on the polarizer is more uniform and thus, the polyester substrate can provide more protection to the display devices and advantageously to the flexible display devices.

**In** the disclosed anti-glare film, the second primer of the polyester substrate can be a coating layer of an adhesion primer for enhancing the polarizing layer to be adhered to the polyvinyl alcohol adhesive layer and having a similar refractive index. The second primer can be a coating layer formed by, for example, acetalized polyvinyl alcohol, polyurethane, urethane, polyether resin, polyacrylic resin, isocyanate or combinations thereof.

**In** the disclosed anti-glare film, the acrylate binder resin of the anti-glare coating layer comprises a (meth)acrylate composition and a initiator, wherein the (meth)acrylate composition comprises a polyurethane (meth)acrylate oligomer with a functionality of 6 to 15, a (meth)acrylate monomer with a functionality of 3 to 6 and a (meth)acrylate monomer with a functionality of less than 3, wherein the molecular weight of the polyurethane (meth)acrylate oligomer is between 1000 and 4500.

**In** a preferred embodiment of the present invention, the (meth)acrylate composition of the acrylate binder resin comprises 35 to 50 parts by weight of the polyurethane (meth)acrylate oligomer with a functionality of 6 to 15, 12 to 20 parts by weight of the (meth)acrylate monomer with a functionality of 3 to 6 and 1.5 to 12 parts by weight of the (meth)acrylate monomer with a functionality of less than 3.

In a preferred embodiment of the present invention, the molecular weight of the polyurethane (meth)acrylate oligomer with a functionality of 6 to 15 is not less than 1000, preferably between 1500 and 4500. **In** another preferred embodiment of the present invention, the polyurethane (meth) acrylate oligomer with a functionality of 6 to 15 is preferably an aliphatic polyurethane (meth) acrylate oligomer with a functionality of 6 to 15.

**In** a preferred embodiment of the present invention, the (meth)acrylate monomer with a functionality of 3 to 6 can be the (meth)acrylate monomer with the molecular weight less than 1000, preferably less than 800, such as, but not limited to pentaerythritol triacrylate (PETA), dipentaerythritol hexaacrylate (DPHA), dipentaerythritol pentaacrylate (DPPA) or combination thereof.

In a preferred embodiment of the present invention, the (meth)acrylate monomer with a functionality of less than 3 can be a (meth)acrylate monomer with a functionality of 1 or 2 and the molecular weight thereof is less than 500, such as, but not limited to 1,6-hexanediol diacrylate (HDDA), isobornyl acrylate (IBOA), cyclic trimethylolpropane formal acrylate (CTFA), 2-phenoxyethyl acrylate (PHEA) or combinations thereof.

In the disclosed anti-glare film, the suitable initiator used in the acrylic binder resin can be selected from those commonly used in the related art, such as, but not limited to, acetophenones-based initiator, diphenylketones-based initiator, propiophenones-based initiator, benzophenones-based initiator, bifunctional α-hydroxyketones-based initiator, acylphosphine oxides-based initiator and the like. The above-mentioned initiators can be used alone or in combination.

In other embodiments of the present invention, other additives such as antistatic agents, colorants, flame retardants, ultraviolet absorbers, antioxidants, surface modifiers can be added to the acrylic binder resin as required for providing desired properties.

The anti-glare coating layer of the present invention is formed by coating an anti-glare coating solution on a polyester substrate. The manufacturing method of the anti-glare film comprises mixing a (meth)acrylate composition comprising a polyurethane (meth)acrylate oligomer with a functionality of 6 to 15, at least one (meth)acrylate monomer with a functionality of not less than 3, at least one (meth)acrylate monomer with functionality of less than 3, an initiator and adequate solvent(s) and stirred evenly for preparing an acrylate binder resin; adding a plurality of organic micro-particles and/or silica nanoparticles, and an adequate organic solvent into the acrylic binder resin and stirring evenly for preparing the anti-glare coating solution; coating the anti-glare coating solution on a polyester substrate, drying and then curling the anti-glare coating solution by radiation to form an anti-glare coating layer to obtain an anti-glare film .

In another embodiment of the present invention, the anti-glare coating layer of the anti-glare film can further comprise an optical functional layer, such as, a hard coating layer, anti-reflective layer thereon. In the disclosed anti-glare film, the anti-reflective layer can be further applied on the anti-glare coating layer to further reduce the surface reflectivity and avoid strong reflecting light. The anti-reflective layer also has a certain leveling property for the anti-glare coating layer with surface haze, which can make the display's appearance more glossy.

In the disclosed anti-glare film, the anti-reflective layer comprises a polysiloxane resin modified by fluorine and acrylate, a plurality of hollow silica nanoparticles, an initiator, and a leveling agent comprising an organic silicon compound modified by (meth)acryl with a perfluoropolyether functional group. The reflectivity of the anti-reflection layer may be less than 1.1%, and preferably not greater than 1.05%. A preparation method of an anti-reflective layer comprises mixing a polysiloxane resin modified by fluorine and acrylate with silica nanoparticles with a particle size between 0.05 µm and 0.3 µm, a suitable initiator, a leveling agent and an organic solvent to form an anti-reflective coating solution, and applying the anti-reflective coating solution on the anti-glare coating layer to achieve an anti-reflective effect. The thickness of the anti-reflective layer is between 0.1 µm and 0.3 µm.

The solvents suitable for the preparation methods of the anti-glare coating solution and the anti-reflective coating solution can be the organic solvents commonly used in the related art, such as ketones, aliphatic, cycloaliphatic or aromatic hydrocarbons, ethers, esters or alcohols. The anti-glare coating solution and the anti-reflective coating solution can use one or one more organic solvents. The suitable solvent can be such as, but not limited to acetone, butanone, cyclohexanone, methyl isobutyl ketone, hexane, cyclohexane, dichloromethane, dichloroethane, toluene, xylene, propylene glycol methyl ether, methyl acetate, ethyl acetate, propyl acetate, butyl acetate, n-butanol, isobutanol, isopropanol, diacetone alcohol, propylene glycol methyl ether acetate, cyclohexanol or tetrahydrofuran and the likes.

The coating method of the anti-glare coating solution and the anti-reflective coating solution can be any method known in the related art, for example, bar coating, doctor blade coating, dip coating, roll coating, spinning coating, slot-die coating and the like.

Another aspect of the present invention is to provide a polarizer, which comprises a polarizing layer and an anti-glare film as described above.

The present invention will be explained in further detail with reference to the examples. However, the present invention is not limited to these examples.

### Example

### Preparation Example 1 - Preparation of acrylic binder resin

42 parts by weight of polyurethane acrylate oligomer (the functionality of 6, molecular weight 2,600, viscosity 62,000 cps (at 25°C), available from Miwon Specialty Chemical, Korea), 4.5 parts by weight of pentaerythritol triacrylate (PETA), 12 parts by weight of dipentaerythritol hexaacrylate (DPHA), 3 parts by weight of isobornyl acrylate (IBOA), 4 parts by weight of initiator (Chemcure-481, available from Chembridge International Co., Ltd., Taiwan), 24.5 parts by weight of ethyl acetate (EAC) and 10 parts by weight of n-butyl acetate (nBAC) were mixed for 1 hour to form an acrylic binder resin.

### Preparation Example 2 - Preparation of anti-glare coating solution I

220 parts by weight of the acrylic binder resin obtained from Preparation Example 1, 2.3 parts by weight of poly(methyl methacrylate (SSX-102, average particle size 2 µm, refractive index 1.49, available from Sekisui Plastics Co., Ltd., Japan), 15.1 parts by weight of chain-like silica nanoparticle dispersion sol with an average primary particle diameter of 9 nm to 15 nm and a chain length of 40 nm to 100 nm (MEK-ST-UP, solid content 20%, solvent: butanone, available from Nissan Chemical, Japan), 7.5 parts by weight of polyether-modified acrylate copolymer leveling agent (BYK-UV3535, solid content of 10%, solvent: ethyl acetate, available from BYK-Chemie, Germany), 3.1 parts by weight of silica nanoparticles dispersion (NanoBYK-3650, average particle size 20nm, solid content 31%, solvent: propylene glycol monomethyl ether acetate/propylene glycol monomethyl ether, commercially obtained from BYK, Germany), 64 parts by weight of ethyl acetate (EAC) and 118 parts by weight of n-butyl acetate (nBAC) were mixed and stirred to be uniformly dispersed to obtain an anti-glare coating solution I.

### Preparation Example 3 - Preparation of anti-glare coating solution II

220 parts by weight of acrylic binder resin obtained from Preparation Example 1, 16.2 parts by weight of methyl methacrylate-styrene-copolymer particles (XX-49IK, average particle size 5 µm, refractive index 1.545, available from Sekisui Plastics Co., Ltd., Japan), 4.2 parts by weight of methyl methacrylate-styrene-copolymer particles (XX-50IK, average particle size 3.5 µm, refractive index 1.555, available from Sekisui Plastics Co., Ltd., Japan), 6.0 parts by weight of polyether-modified polydimethylsiloxane leveling agent (BYK-333, solid content 10%, solvent: n-butyl acetate, commercially obtained from BYK, Germany), 16.4 parts by weight of silica nanoparticles dispersion (NanoBYK-3650), 41.2 parts by weight of ethyl acetate (EAC), 82.4 parts by weight of n-propyl acetate (nPAC) and 41.2 parts by weight of propylene glycol methyl ether acetate (PGMEA), were mixed and stirred to be uniformly dispersed to obtain an anti-glare coating solution II.

### Preparation Example 4-Preparation of anti-glare coating solution III

220 parts by weight of acrylic binder resin obtained from Preparation Example 1, 26 parts by weight of amorphous silica microparticles (Nipsil^{®} SS-50F, average particle size 2.2 µm, BET specific surface area 85 m²/g, available form Tosoh Silica Corp., Japan), 2.2 parts by weight of dispersing agent (DisperBYK-2150, solid content of 5%, solvents: ethyl acetate and propylene glycol methyl ether acetate, available from BYK-Chemie, Germany), 13 parts by weight of polyether-modified polydimethylsiloxane leveling agent (BYK-333, solid content 10%, solvent: n-butyl acetate, commercially obtained from BYK, Germany), 65 parts by weight of ethyl acetate (EAC) and 160 parts by weight of n-propyl acetate (nPAC) were mixed and stirred to be uniformly dispersed to obtain an anti-glare coating solution III.

### Preparation Example 5-Preparation of anti-glare coating solution IV

220 parts by weight of acrylic binder resin obtained from Preparation Example 1, 2.2 parts by weight of amorphous silica microparticles (Nipsil^{®} SS-50F), 0.1 parts by weight of dispersing agent (DisperBYK-2150), 0.3 parts by weight of polyether-modified polydimethylsiloxane leveling agent (BYK-333), 60 parts by weight of ethyl acetate (EAC) and 160 parts by weight of n-propyl acetate (nPAC) were mixed and stirred to be uniformly dispersed to obtain an anti-glare coating solution IV.

### Preparation Example 6-Preparation of anti-reflective coating solution

25.4 parts by weight of fluorine-containing acrylate-modified polysiloxane resin (X-12-2430C, available from Shin-Etsu Chemical Co., Ltd., Japan), 1.6 parts by weight of photoinitiator (KIP-160, available from IGM Resin, Netherlands), 103.5 parts by weight of a perfluoropolyether containing (meth)acryl-modified organosilicone (X-71-1203E, solid content of 20%, solvent: methyl ethyl ketone, available from Shin-Etsu Chemical Co., Ltd., Japan), 211.5 parts by weight of hollow silica nanoparticle dispersion (Thrulya 4320, solid content 20%, average primary particle size 60 nm, solvent: methyl isobutyl ketone, JGC Catalysts and Chemicals Ltd., Japan), 1772 parts by weight of ethyl acetate (EAC) and 886 parts by weight of propylene glycol methyl ether acetate (PGMEA) were mixed and stirred for 10 minutes to obtain an anti-reflective layer solution.

### Preparation Example 7- Preparation of polyethylene terephthalate substrate

Polyethylene terephthalate resin particles with a melting point of 250°C to 260°C were heated to a molten state at 280°C and extruded by an extruder (DNT-EXT01, manufactured by JSW, Japan) and cooled to room temperature to from a uniform, non-crystalline oriented polyethylene terephthalate film. The polyethylene terephthalate film was stretched longitudinally at 100°C by a dry stretching machine (MA-08, manufactured by Hsin Yin Machinery Works, Taiwan) with a stretching ratio of 3.0 to enhance the crystalline orientation and light transmittance and then stretched in transverse direction with a stretching ratio of 3.0 to obtain a biaxial stretched polyethylene terephthalate film with a light transmittance of more than 90%, an average refractive index of 1.66, in-plane retardation (R0) of 271 nm, a thickness of 76 µm. The birefringence difference (Δn) of polyethylene terephthalate film was 0.004 by dividing the in-plane retardation by the thickness.

### Example 1

The polyethylene terephthalate film of Preparation Example 7 was taken as a polyester substrate. A photo-curable acrylic resin with a refractive index of 1.61(n₁) (FL219, available from Everwide Chemical Co. Taiwan) was coated and cured on one side of the polyethylene terephthalate film to form the first primer, and a photo-curable acrylic resin with a refractive index of 1.51 (n₂) (660G-40L, available from Eternal Materials Co. Ltd, Taiwan) was coated and cured on the other side of the polyethylene terephthalate film to form the second primer. The polyester substrate was coated with an anti-glare solution I prepared in Preparation Example 2 on the first primer, dried and cured by a UV lamp with a radiation dose of 80 mJ/cm² under nitrogen atmosphere thereafter for forming an anti-glare coating layer to obtain an anti-glare film of the present invention. The refractive indexes of the primers of the anti-glare film, the thickness of the anti-glare coating layer, the haze of the anti-glare coating layer, and the evaluation of the interference rainbow patterns of the anti-glare film were measured and evaluated according to the methods described below. The measurement and evaluation results were shown in Table 1.

The refractive indexes of the primers of the anti-glare film were determined by adhering a black acrylic plate to both side of the PET polyester substrate respectively and measuring by HITACHI U-4150 spectrometer in a wavelength range of 380 nm to 780 nm. The average diffuse and specular reflectance of SCI (Specular Component Included) mode and the average diffuse reflectance of SCE (Specular Component Excluded) mode of the surfaces of both sides of PET polyester substrate were measured and calculated by a spectral reflectance calculator (Filmetrics) with inputting the refractive index of PET polyester substrate and the thickness of each layer to calculating the refractive indexes of the first primer and second primer of the PET polyester substrate.

Thickness measurement: The thickness of the anti-glare coating layer was determined by Inductive Digital Comparators (Extramess 2001,manufactured by Mahr Inc., Germany) in accordance with the method of JIS K5600-1-7:2014 to measure the thickness.

Haze measurement: The haze of the anti-glare coating layer was measured according to the test method of JIS K7136 by the NDH-2000 Haze Meter (manufactured by Nippon Denshoku industries, Japan).

Interference rainbow patterns evaluation: the anti-glare film was adhered via a transparent optical adhesive onto a polarizing layer of a liquid crystal display (Acer 27" Agile-Splendor IPS XV272K) whose surface protective film was removed, and was evaluated the occurrence of the interference rainbow patterns on the display at viewing angle of 60 degrees. If there was no identifiable interference rainbow patterns, the evaluation was " excellent"(○); if there was an identifiable interference rainbow patterns, the evaluation was "poor" (x).

### Example 2

A 50 µm PET film with an in-plane retardation of 407 nm, a birefringence of 0.008 and an average refractive index of 1.66 and coated with a first primer with a refractive index of 1.61 and a second primer with a refractive index of 1.56 (EBQ-410, available from Mitsubishi Chemical Group, Japan) was used as polyester substrate. The anti-glare coating layer was formed on the first primer of the polyester substrate by the same method as in Example 1 to obtain an anti-glare film of the present invention.

The thickness and the haze of obtained anti-glare film in Example 2 were measured and the occurrence of interference rainbow patterns was evaluated by the process as used in Example 1. The results were shown in Table 1.

### Example 3

A 50 µm PET film with an in-plane retardation of 456 nm, a birefringence of 0.009, and an average refractive index of 1.66 and coated with a first primer with a refractive index of 1.64 and a second primer with a refractive index of 1.56 (EBQ-409, available from Mitsubishi Chemical Group, Japan) was used as polyester substrate. The anti-glare coating layer was formed on the first primer of the polyester substrate by the same method as in Example 1 to obtain an anti-glare film of the present invention.

The thickness and the haze of obtained anti-glare film in Example 3 were measured and the occurrence of interference rainbow patterns was evaluated by the process as used in Example 1. The results were shown in Table 1.

### Example 4

A 66 µm PET film with an in-plane retardation of 713 nm, a birefringence of 0.011, and an average refractive index of 1.66 and coated with a first primer with a refractive index of 1.61 and a second primer with a refractive index of 1.54 (QBN-0017, available from Mitsubishi Chemical Group, Japan) was used as polyester substrate. The anti-glare coating layer was formed on the first primer of the polyester substrate by the same method as in Example 1 to obtain an anti-glare film of the present invention.

The thickness and the haze of obtained anti-glare film in Example 4 were measured and the occurrence of interference rainbow patterns was evaluated by the process as used in Example 1. The results were shown in Table 1.

### Example 5

A 75 µm PET film with an in-plane retardation of 1080 nm, a birefringence of 0.014 and an average refractive index of 1.66 and coated with a first primer with a refractive index of 1.65 and a second primer with a refractive index of 1.52 (O700E, available from Mitsubishi Chemical Group, Japan) was used as polyester substrate. The polyester substrate was coated with an anti-glare solution II prepared in Preparation Example 3 on the first primer, dried and cured by a UV lamp with a radiation dose of 80 mJ/cm² under nitrogen atmosphere thereafter for forming an anti-glare coating layer to obtain an anti-glare film of the present invention.

The thickness and the haze of obtained anti-glare film in Example 5 were measured and the occurrence of interference rainbow patterns was evaluated by the process as used in Example 1. The results were shown in Table 1.

### Example 6

A 75 µm PET film with an in-plane retardation of 1080 nm, a birefringence of 0.014 and an average refractive index of 1.66 and coated with a first primer with a refractive index of 1.65 and a second primer with a refractive index of 1.52 (O700E) was used as polyester substrate. The polyester substrate was coated with an anti-glare solution III prepared in Preparation Example 4 on the first primer, dried and cured by a UV lamp with a radiation dose of 80 mJ/cm² under nitrogen atmosphere thereafter for forming an anti-glare coating layer to obtain an anti-glare film of the present invention.

The thickness and the haze of obtained anti-glare film in Example 6 were measured and the occurrence of interference rainbow patterns was evaluated by the process as used in Example 1. The results were shown in Table 1.

### Example 7

A 75 µm PET film with an in-plane retardation of 1080 nm, a birefringence of 0.014 and an average refractive index of 1.66 and coated with a first primer with a refractive index of 1.65 and a second primer with a refractive index of 1.52 (O700E) was used as polyester substrate. The polyester substrate was coated with an anti-glare solution IV prepared in Preparation Example 5 on the first primer, dried and cured by a UV lamp with a radiation dose of 80 mJ/cm² under nitrogen atmosphere thereafter for forming an anti-glare coating layer to obtain an anti-glare film of the present invention.

The thickness and the haze of obtained anti-glare film in Example 7 were measured and the occurrence of interference rainbow patterns was evaluated by the process as used in Example 1. The results were shown in Table 1.

### Example 8

An anti-reflective coating solution prepared in Preparation Example 6 was coated on the anti-glare film obtained in Example 1, dried at 80°C and cured by a UV lamp with a radiation dose of 350 mJ/cm² under nitrogen atmosphere to form a thickness of 0.13 µm anti-reflective layer on the anti-glare coating layer to obtain an anti-reflective anti-glare film with a relatively low surface reflectivity.

The thickness and the haze of obtained anti-reflective anti-glare film in Example 8 were measured and the occurrence of interference rainbow patterns was evaluated by the process as used in Example 1. The result was shown in Table 1.

### Comparative Example 1

The polyethylene terephthalate film manufactured in Preparation Example 7 was taken as a polyester substrate and coated a photo-curable acrylic resin with a refractive index of 1.51 (660G-40L, available from Eternal Materials Co. Ltd, Taiwan) at both sides as primers to form a PET protective film. The polyester substrate was coated with an anti-glare solution I prepared in Preparation Example 2 on the one side of the primers, dried and cured by a UV lamp with a radiation dose of 80 mJ/cm² under nitrogen atmosphere thereafter for forming an anti-glare coating layer to obtain an anti-glare film.

The thickness and the haze of obtained anti-glare film in Comparative Example 1 were measured and the occurrence of interference rainbow patterns was evaluated by the process as used in Example 1. The results were shown in Table 2.

### Comparative Example 2

A 52 µm PET film with an in-plane retardation of 974 nm, a birefringence of 0.019, and an average refractive index of 1.66 and coated with a first primer with a refractive index of 1.56 and a second primer with a refractive index of 1.55 (QBN-0015, available from Mitsubishi Chemical Group, Japan) was used as polyester substrate. The anti-glare solution I prepared in Preparation Example 2 was coated on the first primer of the polyester substrate, dried and cured by a UV lamp with a radiation dose of 80 mJ/cm² under nitrogen atmosphere to form an anti-glare coating layer on the polyester substrate to obtain an anti-glare film.

The thickness and the haze of obtained anti-glare film in Comparative Example 2 were measured and the occurrence of interference rainbow patterns was evaluated by the process as used in Example 1. The results were shown in Table 2.

### Comparative Example 3

A 75 µm PET film with an in-plane retardation of 2384 nm, a birefringence of 0.032, and an average refractive index of 1.66 and coated with a first primer with a refractive index of 1.64 and a second primer with a refractive index of 1.59 (QBN-0009, available from Mitsubishi Chemical Group, Japan) was used as polyester substrate. The anti-glare solution I prepared in Preparation Example 2 was coated on the first primer of the polyester substrate by the same process in Comparative Example 2 to form an anti-glare coating layer on the polyester substrate to obtain an anti-glare film.

The thickness and the haze of obtained anti-glare film in Comparative Example 3 were measured and the occurrence of interference rainbow patterns was evaluated by the process as used in Example 1. The results were shown in Table 2.

### Comparative Example 4

A 75 µm PET film with an in-plane retardation 2490 nm, a birefringence of 0.033, average refractive index of 1.66, and coated with a first primer with a refractive index of 1.61 and a second primer with a refractive index of 1.59 (QBN-0012, available from Mitsubishi Chemical Group, Japan) was used as polyester substrate. The anti-glare solution I prepared in Preparation Example 2 was coated on the first primer of the polyester substrate by the same process in Comparative Example 2 to form an anti-glare coating layer on the polyester substrate to obtain an anti-glare film.

The thickness and the haze of obtained anti-glare film in Comparative Example 4 were measured and the occurrence of interference rainbow patterns was evaluated by the process as used in Example 1. The results were shown in Table 2.

**Table 1**

| | Example 1 | Example 2 | Example 3 | Example 4 | Example 5 | Example 6 | Example 7 | Example 8 |
|---|---|---|---|---|---|---|---|---|
| Thickness of polyester substrate (µm) | 76 | 50 | 50 | 66 | 75 | 75 | 40 | 76 |
| Birefringence of polyester substrate | 0.004 | 0.008 | 0.009 | 0.011 | 0.014 | 0.02 | 0.03 | 0.004 |
| In-plane retardation of polyester substrate (R0, nm) | 271 | 407 | 456 | 713 | 1080 | 1080 | 1080 | 271 |
| Refractive index of polyester substrate (nₚ) | 1.66 | 1.66 | 1.66 | 1.66 | 1.66 | 1.66 | 1.66 | 1.66 |
| First refractive index (n₁) | 1.61 | 1.61 | 1.64 | 1.61 | 1.65 | 1.65 | 1.65 | 1.61 |
| Second refractive index (n₂) | 1.51 | 1.56 | 1.56 | 1.54 | 1.52 | 1.52 | 1.52 | 1.51 |
| Total haze (%) | 2.38 | 1.34 | 1.32 | 2.17 | 29.02 | 52.59 | 30.68 | 2.27 |
| Thickness of anti-glare coating layer (µm) | 6.8 | 7.0 | 6.2 | 5.6 | 7.8 | 6.6 | 5.0 | 6.2 |
| Interference rainbow patterns evaluation at viewing angle of 60° | ○ | ○ | ○ | ○ | ○ | ○ | ○ | ○ |

**Table 2**

| | Comparative Example 1 | Comparative Example 2 | Comparative Example 3 | Comparative Example 4 |
|---|---|---|---|---|
| Thickness of polyester substrate (µm) | 76 | 52 | 75 | 75 |
| Birefringence of polyester substrate | 0.004 | 0.019 | 0.032 | 0.033 |
| In-plane retardation of polyester substrate (R0, nm) | 271 | 974 | 2384 | 2490 |
| Refractive index of polyester substrate (nₚ) | 1.66 | 1.66 | 1.66 | 1.66 |
| First refractive index (n₁) | 1.51 | 1.56 | 1.64 | 1.61 |
| Second refractive index (n₂) | 1.51 | 1.55 | 1.59 | 1.59 |
| Total haze (%) | 1.45 | 1.36 | 2.62 | 2.38 |
| Thickness of anti-glare coating layer (µm) | 5.6 | 6.5 | 6.2 | 7.4 |
| Interference rainbow patterns evaluation at viewing angle of 60° | X | X | X | X |

As the test results shown in Tables 1 to 2, the polyester substrate with an in-plane retardation ≤ 1500 used in the anti-glare film can reduce occurrence of the interference rainbow patterns by making the average refractive index nₚ of the polyester substrate, the first refractive index (n₁) of the first primer layer and the second refractive index (n₂) of the second primer layer satisfy the relationship: nₚ>n₁>n₂ and (nₚ-n₁)/(nₚ-n₂) ≤0.7. Even the total haze of the anti-glare coating layer on the first primer layer was ≤50%, or even was ≤5%, no interference rainbow patterns was observed. The light interference was disrupted at both sides of the polyester substrate without using a high haze layer or high roughness layer. Therefore, a polyester substrate with high in-plane retardation (≥8000 nm) is not required for the substrate of the anti-glare film at viewing side of a display to reduce interference rainbow patterns.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

## Claims

1. An anti-glare film, comprising:
a polyester substrate with an in-plane retardation not greater than 1500 nm and having an average refractive index nₚ of 1.60 to 1.70;
an anti-glare coating layer formed on one side of the polyester substrate, wherein the anti-glare coating layer comprises an acrylic binder and a plurality of organic micro-particles; and
a first primer layer disposed between the polyester substrate and the anti-glare coating layer, wherein the first primer layer has a first refractive index (n₁) of 1.55 to 1.65, and the average refractive index nₚ of the polyester substrate is greater than the first refractive index (n₁) of the first primer layer.

2. The anti-glare film as claimed in Claim 1, wherein a birefringence of the polyester substrate is between 0.003 to 0.015.

3. The anti-glare film as claimed in Claim 1, wherein the anti-glare coating layer contains 0.5 to 25 parts by weight of organic micro-particles per 100 parts by weight of the acrylic binder.

4. The anti-glare film as claimed in Claim 1, wherein the anti-glare coating layer further contains 0.5 to 12 parts by weight of silica nanoparticles per 100 parts by weight of the acrylic binder.

5. The anti-glare film as claimed in Claim 1, wherein the polyester substrate is a uniaxial or biaxial stretched polyester film.

6. The anti-glare film as claimed in Claim 1, further comprising an anti-reflective layer formed on the anti-glare coating layer.

7. The anti-glare film as claimed in Claim 1, further comprising a second primer layer disposed on another side of the polyester substrate opposite to the first primer layer, wherein the second primer layer has a second refractive index n₂ of 1.51 to 1.60, and the average refractive index nₚ, the first refractive index (n₁) and the second refractive index n₂ satisfy the relationships of (nₚ-n₁)/(nₚ-n₂) ≤0.7 and (n₁-n₂) ≥0.05.

8. An anti-glare film comprising:
a polyester substrate with an in-plane retardation not greater than 1500 nm and having an average refractive index nₚ of 1.60 to 1.70;
an anti-glare coating layer formed on one side of the polyester substrate, wherein the anti-glare coating layer comprises an acrylic binder and a plurality of amorphous silica micro-particles; and
a first primer layer disposed between the polyester substrate and the anti-glare coating layer, wherein the first primer layer has a first refractive index (n₁) of 1.55 to 1.65, and the average refractive index nₚ of the polyester substrate is greater than the first refractive index (n₁) of the first primer layer.

9. The anti-glare film as claimed in Claim 8, wherein the anti-glare coating layer contains 2 to 35 parts by weight of amorphous silica micro-particles per 100 parts by weight of the acrylic binder.

10. The anti-glare film as claimed in Claim 8, wherein the anti-glare coating layer further contains 3 to 20 parts by weight of organic micro-particles per 100 parts by weight of the acrylic binder.
